# EUROPEAN PATENT APPLICATION

(11) **EP 4 484 467 A1**
(43) Date of publication of application: **01.01.2025**
(21) Application number: 24185369.6
(22) Date of filing: 28.06.2024
(51) Int. Cl.: C08G 73/10, C08K 3/36, C08K 3/38, C08K 9/06, C09D 179/08

(54) **POLYIMIDE VARNISH FOR HIGH-FUNCTIONAL CONDUCTOR COATING AND POLYIMIDE COATING PREPARED THEREFROM**

(30) Priority: 30.06.2023 KR 20230085001
(71) Applicant: PI Advanced Materials Co., Ltd., Chungcheongbuk-do 27818 (KR)
(72) Inventor: MOON, GyeongMin, 27818 Jincheon-gun (KR); RO, Gyeong Hyeon, 27818 Jincheon-gun (KR); PARK, Se Joo, 27818 Jincheon-gun (KR); LEE, Ik Sang, 27818 Jincheon-gun (KR)
(74) Representative: Dehns

(57) **Abstract**

Provided is polyimide varnish comprising: a polyamic acid solution containing diamine monomer and dianhydride monomer as polymerized units; a first additive containing boron nitride; a second additive containing nanosilica; and a dispersant.

## Description

### CROSS-REFERENCE TO RELATED APPLICATIONS

This application claims priority under 35 U.S.C. §119 to Korean Patent Application No. 10-2023-0085001, filed on June 30, 2023, in the Korean Intellectual Property Office, the disclosure of which is incorporated herein by reference in its entirety.

### TECHNICAL FIELD

The following disclosure relates to polyimide varnish and a polyimide coating prepared therefrom. More particularly, the present disclosure relates to polyimide varnish having enhanced pulse endurance, adhesion, and thermal conductivity after curing, and improved coefficients of friction, and to a polyimide coating prepared therefrom.

### BACKGROUND

An insulating layer (insulation coating) that covers a conductor is required to have excellent insulation properties, adhesion to the conductor, heat resistance, mechanical strength, etc. Examples of resins usable in the insulating layer may include polyimide resin, polyamideimide resin, and polyesterimide resin, etc. In particular, polyimide resin among these resins is a material with excellent heat resistance and insulation properties and has excellent properties for use as a material for coating a conductor.

Polyimide resin refers to a highly heat-resistant resin obtained by performing solution polymerization on aromatic dianhydride and aromatic diamine or aromatic diisocyanate to produce a polyamic acid derivative, followed by ring-closure dehydration at high temperature and imidization. A method of forming an insulation coating using the polyimide resin may include, for example, a method of applying or coating polyimide varnish, a precursor of polyimide resin, around a conductor wire, and then imidizing the polyimide varnish in a curing furnace capable of heat treatment at a predetermined temperature.

The method of forming the insulating coating may cause differences in physical properties, productivity, and manufacturing cost of the prepared insulating coating depending on conditions such as a temperature of the curing furnace, the number of coatings of polyimide varnish, and the coating speed, etc. In other words, forming an insulation coating at a high temperature may be advantageous for producing an insulating coating having excellent physical properties, and productivity may increase as the number of coatings is small or the coating speed is fast.

However, when a temperature of the curing furnace is extremely high, problems may arise such as defects occurring on a surface of the prepared insulation coating or carbonization of the polyimide resin. When the number of coatings is extremely small or the coating speed is extremely fast, physical properties of polyimide coatings to be prepared may be deteriorated. In addition, despite excellent physical properties thereof, general polyimide resin does not have excellent adhesion to conductors, and thus problems of appearance defects may occur when forming an insulating coating.

As described above, there are many difficulties in improving properties required for polyimide varnish and polyimide resin prepared therefrom. In particular, since it is common for improving one property to result in a decrease in other properties, satisfying multiple properties simultaneously is a task that is constantly being researched in related technical fields.

Therefore, there is a high need for polyimide varnish for coating a conductor that has excellent productivity and process efficiency, and simultaneously satisfies the heat resistance, insulation, and mechanical properties of polyimide while having excellent adhesion to the conductors as described above.

### SUMMARY

An embodiment of the present invention is directed to providing polyimide varnish having enhanced pulse endurance, adhesion, and thermal conductivity after curing, and improved coefficients of friction, and a polyimide coating prepared therefrom.

Another embodiment of the present invention is directed to providing polyimide varnish for high-functional conductor coating for use in windings for electric vehicles (EVs) and a polyimide coating prepared therefrom.

Various modifications can be made and various embodiments may be implemented in the present disclosure, and specific exemplary embodiments are illustrated in the drawings and described in detail. However, these exemplary embodiments are not intended to limit the present disclosure, and should be understood to comprise all modifications, equivalents, and substitutes included in the spirit and scope of the present disclosure.

Terms used in the present application are only used to describe specific embodiments and are not intended to limit the present disclosure. Singular expressions include plural expressions unless the context clearly indicates otherwise. In the present specification, terms such as "comprise" or "have" are intended to designate the presence of features, numbers, steps, operations, components, parts, or combinations thereof described in the specification and it should not be understood as precluding the possibility of the presence or addition of one or more other features, numbers, steps, operations, components, parts, or combinations thereof.

When amounts, concentrations, or other values or parameters herein are given as ranges, preferred ranges, or lists of upper desirable values and lower desirable values, it should be understood as specifically disclosing all ranges formed by any pair of any upper range limit or preferred value and any lower range limit or preferred value, regardless of whether the scope is separately disclosed.

Where ranges of numerical values are stated herein, unless otherwise stated, it is intended that the endpoints of the range and the scope of the parent invention within the range are not limited to the specific values stated when defining the range.

As used herein, "dianhydride" is intended to include precursors or derivatives thereof, which are also referred to as "dianhydride" or "acid dianhydride". These products may technically not be dianhydrides, but will nonetheless react with diamines to form polyamic acids, and the polyamic acids may be converted back into polyimides.

As used herein, "diamine" is intended to include precursors or derivatives thereof, which may technically not be diamines, but will nonetheless react with dianhydride acid to form a polyamic acid, and the polyamic acid may be converted back into polyimide.

Further, unless defined otherwise, all terms used herein, including technical or scientific terms, have the same meaning as commonly understood by one of ordinary skill in the art to which the present disclosure belongs. Terms such as those defined in commonly used dictionaries should be interpreted as having a meaning consistent with the meaning in the context of the related art, and unless explicitly defined in the present application, it is not to be construed in an idealized or overly formal sense. Specific details for the implementation of the invention will be described below.

The present disclosure relates to polyimide varnish for high-functional conductor coating and a polyimide coating prepared therefrom.

### Polyimide varnish

The present disclosure provides polyimide varnish comprising a polyamic acid solution containing diamine monomer and dianhydride monomer as polymerized units; a first additive containing boron nitride; a second additive containing nanosilica; and a dispersant.

### Polyamic acid solution

The diamine monomer may comprise at least one selected from the group consisting of 1,4-diaminobenzene (PPD), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diamino diphenylmethane, 4,4'-diaminobenzanilide, 3,3'-dimethoxybenzidine, 2,2'-dimethoxybenzidine, 3,3'-diaminodiphenyl ether, 3,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3)-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane, and preferably comprise at least one selected from the group consisting of 1,4-diaminobenzene (PPD) and 4,4'-diaminodiphenyl ether (ODA), and more preferably comprise 1,4-diaminobenzene (PPD) and 4,4'-diaminodiphenyl ether (ODA).

The dianhydride monomer may comprise at least one selected from the group consisting of pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl)propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride, and preferably comprise pyromellitic dianhydride (PMDA).

In the present disclosure, in the total dianhydride monomers, pyromellitic dianhydride (PMDA) may be included in a ratio of 50 mol% or more, specifically 60 mol% or more, 70 mol% or more, 75 mol% or more, 80 mol% or more, 85 mol% or more, 90 mol% or more, 95 mol% or more, 99 mol% or more, or 100 mol% or more.

Further, in the total diamine monomers, 4,4'-diaminodiphenyl ether (ODA) may be included in a ratio of 0 to 100 mol%, specifically 50 to 95 mol%, 60 to 90 mol%, 65 to 85 mol%, 70 to 80 mol%, and 73 to 77 mol%. When 4,4'-diaminodiphenyl ether (ODA) is included in a 0 mol% ratio, 1,4-diaminobenzene (PPD) may be included in a 100 mol% ratio.

Further, in the total diamine monomers, 1,4'-diaminobenzene (PPD) may be included in a ratio of 0 to 100 mol%, specifically 5 to 45 mol%, 10 to 40 mol%, 15 to 35 mol%, 20 to 30 mol%, and 23 to 27 mol%. When 1,4-diaminobenzene (PPD) is included in a 0 mol% ratio, 4,4'-diaminodiphenyl ether (ODA) may be included in a 100 mol% ratio.

The polyamic acid solution may contain the diamine monomer in an amount of 90 to 110 mol%, preferably 95 to 105 mol%, more preferably 98 to 102 mol%, and even more preferably 99 to 101 mol%.

The polyamic acid solution may contain the dianhydride monomer in an amount of 90 to 110 mol%, preferably 95 to 105 mol%, more preferably 98 to 102 mol%, and even more preferably 100 mol%.

The polyamic acid solution may contain 95 to 105 mol% of the dianhydride monomer relative to 100 mol% of the diamine monomer. For example, the lower limit of the dianhydride monomer may be 95.5 mol% or more, 96 mol% or more, 96.5 mol% or more, 97 mol% or more, 97.5 mol% or more, 98 mol% or more, 98.5 mol% or more, 99 mol% or more, or 99.5 mol% or more, and the upper limit thereof may be 105 mol% or less, 104 mol% or less, 103 mol% or less, 102 mol% or less, 101 mol% or less, or 100 mol% or less.

The polyamic acid solution may contain the dianhydride monomer and the diamine monomer in a molar ratio of 6 : 4 to 4 : 6.

The polyamic acid solution may further contain an organic solvent.

The organic solvent may comprise at least one selected from the group consisting of N,N'-dimethylacetamide (DMAc), N-methyl-2-pyrrolidone (NMP), N,N'-dimethylformamide (DMF), dimethyl sulfoxide (DMSO), diethyl acetamide (DEAc), N-ethyl-2-pyrrolidone (NEP), N,N'-diethylformamide (DEF), dimethylpropanamide (DMPA), and gamma-butyrolactone (GBL), and preferably N,N'-dimethylacetamide (DMAc).

### First additive

The polyimide varnish of the present disclosure may comprise a first additive containing boron nitride.

The first additive may have an amount of 1 to 40 wt%, preferably 2.5 to 20 wt%, more preferably 3 to 15 wt%, and even more preferably 4 to 12 wt%, relative to the weight of solid content of the polyimide varnish.

If the amount of the first additive exceeds 40 wt%, it is not desirable since mechanical properties of the polyimide coating to be prepared may decrease, and the amount of the additive is excessively large, making it difficult to achieve even dispersion. Meanwhile, when the amount of the first additive is less than 1 wt%, it is not preferable since there is no effect of improving heat dissipation characteristics.

The first additive may have a particle size (D90) of 1 to 20 um. For example, the lower limit thereof may be 1.5 um, 1.7 um, 1.9 um, 2.0 um, 2.2 um, 2.4 um, 2.6 um, 2.8 um, 3.0 um, 3.1 um, 3.2 um, 3.3 um, 3.4 um or 3.5 um or more, and the upper limit thereof may be 9.5 um, 9.0 um, 8.5 um, 8.0 um, 7.5 um, 7.0 um, 6.5 um, 6.0 um, 5.8 um, 5.7 um, or 5.5 um or less.

The boron nitride may be at least one type selected from the group consisting of cubic boron nitride (cBN), amorphous boron nitride (aBN), and hexagonal boron nitride (hBN), and preferably hexagonal boron nitride (hBN).

### Second additive

The polyimide varnish of the present disclosure may comprise a second additive containing nanosilica.

The second additive may have an amount of 0.01 to 60 wt%, relative to the weight of solid content of the polyimide varnish. For example, the lower limit of the amount of the second additive may be 0.03 wt% or more, 0.05 wt% or more, 0.07 wt% or more, 0.1 wt% or more, 0.3 wt% or more, 0.4 wt% or more or 0.5 wt% or more, and the upper limit thereof may be 50 wt% or less, 30 wt% or less, 10 wt% or less, 7 wt% or less, 3 wt% or less, 1.5 wt% or less, 1.2 wt% or less, or 1 wt% or less.

If the amount of the second additive exceeds 60 wt%, it is not desirable since mechanical properties of the polyimide coating to be prepared may decrease, and the amount of the additive is less than 0.01 wt%, it is not preferable since pulse endurance is not enhanced.

An average particle size of the second additive may be 1 to 200 nm, specifically, for example, 5 to 150 nm, 5 to 100 nm, 5 to 70 nm, 10 to 50 nm, or 10 to 30 nm. The average particle size may be measured through equipment such as BET, SEM, zeta potential analyzer, and the like.

### Dispersant

The polyimide varnish of the present disclosure may contain a dispersant to improve the dispersibility of the first additive.

The dispersant may include at least one selected from the group consisting of a polyethylene-based dispersant, a polyester-based dispersant, a polycarboxylic acid ester-based dispersant, an unsaturated polyamide-based dispersant, a polycarboxylic acid-based dispersant, a polycarboxylic acid alkyl salt dispersant, a polyacrylic-based dispersant, a polyethyleneimine-based dispersant, and a polyurethane-based dispersant. Preferably, the polyurethane-based dispersant may be used. The dispersion ability of boron nitride may be improved due to the strong polarity of the polyurethane-based dispersant.

The polyurethane-based dispersant is a dispersant having an amine value and/or an acid value, and may be a polyurethane polymer. Preferably, the polyurethane-based dispersant is a highly dispersing dispersant having only an amine value and may be a polymer containing urethane bonds in its structure.

The dispersant may have an acid value in the range of 10 to 200 mgKOH/g or an amine value in the range of 5 to 200 mgKOH/g, but is not limited thereto.

In an embodiment, the acid value of the dispersant may be about 20 mgKOH/g or more, 30 mgKOH/g or more, 40 mgKOH/g or more, 50 mgKOH/g or more, 60 mgKOH/g or more, 70 mgKOH/g or more, 80 mgKOH/g or more or 90 mgKOH/g or more, or may be about 190 mgKOH/g or less, 180 mgKOH/g or less, 170 mgKOH/g or less, 160 mgKOH/g or less, 150 mgKOH/g or less, 140 mgKOH/g or less, 130 mgKOH/g or less, 120 mgKOH/g or less, 110 mgKOH/g or less, or 100 mgKOH/g or less. Here, the acid value refers to the number obtained by dividing the acid group (-COOH) of the dispersant by potassium hydroxide (KOH) amount needed for titration with KOH (a value expressed in milligrams (mg) of the titrated KOH amount needed per 1 g of the dispersant).

In an embodiment, the amine value of the dispersant may be about 10 mgKOH/g or more, about 15 mgKOH/g or more, about 20 mgKOH/g or more, 30 mgKOH/g or more, 40 mgKOH/g or more, 50 mgKOH/g or more, 60 mgKOH/g or more, 70 mgKOH/g or more, 80 mgKOH/g or more, or 90 mgKOH/g or more, or may be about 190 mgKOH/g or less, 180 mgKOH/g or less, 170 mgKOH/g or less, 160 mgKOH/g or less, 150 mgKOH/g or less, 140 mgKOH/g or less, 130 mgKOH/g or less, 120 mgKOH/g or less, 110 mgKOH/g or less, or 100 mgKOH/g or less. Here, the amine value refers to the number obtained by dividing the amino group (-NH₂, -NHR or -NR₂) of the dispersant by potassium hydroxide (KOH) amount needed for titration with KOH (a value expressed in milligrams (mg) of the titrated KOH amount needed per 1 g of the dispersant).

The dispersant may have a specific gravity of 0.5 to 1.5 g/ml at 20°C. For example, the lower limit of the specific gravity of the dispersant may be 0.6 g/ml, 0.7 g/ml, 0.8 g/ml, 0.9 g/ml or 1.00 g/ml or more. Further, the upper limit of the specific gravity of the dispersant may be 1.4 g/ml, 1.3 g/ml, 1.2 g/ml, 1.1 g/ml, 1.07 g/ml or 1.05 g/ml or less.

The dispersant may have an amount of 1 to 25 wt%, preferably 2.5 to 20 wt%, more preferably 3 to 15 wt%, even more preferably 3.3 to 10 wt%, and even more preferably 3.5 to 6.5 wt%, relative to the weight of the first additive.

If the amount of the dispersant is less than 1 wt%, it is not desirable since there is no effect of improving the dispersibility of the first additive, and if the amount of the dispersant is more than 25 wt%, it is not desirable since the thermal stability may decrease.

### Polyimide varnish and cured product thereof

The polyimide varnish may further comprise a silane coupling agent. The silane coupling agent may modify a surface of at least one of the first additive and the second additive. By using the silane coupling agent, it is possible to perform surface modification to thereby prevent agglomeration of the additives in the polyimide varnish and increase an interaction with the solid content (polyamic acid) by functional groups of the silane coupling agent, thereby enhancing dispersibility and miscibility.

The silane coupling agent may comprise at least one selected from the group consisting of epoxy silane-based, alkyloxy silane-based, amino silane-based, methacryloxy silane-based, isocyanate silane-based, and fluorosilane-based coupling agents, and may preferably comprise epoxy silane-based coupling agent.

The epoxy silane-based coupling agent may comprise at least one selected from the group consisting of (3-glycidoxypropyl)trimethoxysilane, 2-(3,4-epoxycyclohexyl)ethyltrimethoxysilane, (3-glycidoxypropyl)methyldimethoxysilane, (3-glycidoxypropyl)methyldiethoxysilane, and (3-glycidoxypropyl)triethoxysilane, may preferably comprise (3-glycidoxypropyl)trimethoxysilane, and more preferably OFS-6040 among (3-glycidoxypropyl)trimethoxysilane products.

An amount of the silane coupling agent in the polyimide varnish may be 0.01 to 1 wt%, preferably 0.1 to 0.9 wt%, more preferably 0.3 to 0.7 wt%, and even more preferably 0.4 to 0.6 wt%.

A solid content of the polyimide varnish may be 5 to 40 wt%, preferably 10 to 38 wt%, and more preferably 12 to 35 wt%. If the solid content of the polyimide varnish is above the above range, it is not desirable since it is difficult to use the polyimide varnish as a coating as the viscosity increases, and if it is below the above range, it is not desirable since it is necessary to remove a large amount of solvent during the curing process, which may increase the manufacturing cost and process time.

The cured product of the polyimide varnish according to the present disclosure may be in the film type, and a thickness of the cured product may be suitably selected in consideration of the use, the environment of use, physical properties, and the like.

In an embodiment, the polyimide varnish according to the present disclosure may have a thickness after curing of 20 to 40 µm, for example, a lower limit of the thickness may be 21 um or more, 22 um or more, 23 um or more, or 24 um or more, and an upper limit thereof may be 35 um or less, 30 um or less, 29 um or less, 28 um or less, or 27 um or less.

In an embodiment, the polyimide varnish according to the present disclosure may have a coefficient of thermal expansion (CTE) after curing of 20 to 30 ppm/°C, preferably 23 to 27 ppm/°C, and more preferably 24 to 26 ppm/°C. The above coefficient of thermal expansion was determined by measuring the slope in the range of 100 to 250°C with TA's thermogravimetric analyzer (TMA) Q400 when raising a temperature from room temperature to 350°C at a rate of 10°C/min.

In an embodiment, the polyimide varnish according to the present disclosure may have a thermal conductivity after curing of 0.2 to 0.8 W/mK, preferably 0.23 to 0.5 W/mK, and more preferably 0.25 to 0.45 W/mK. The thermal conductivity may be determined by measuring thermal diffusivity in a thickness direction (through-plane) of the cured polyimide varnish under N₂ nitrogen gas conditions using a thermal conductivity meter [light flash apparatus (LFA), LFA467, NETZSCH], and calculating the thermal conductivity by multiplying the measured thermal conductivity values by the density (weight/volume) and specific heat (specific heat values measured using DSC).

In an embodiment, the polyimide varnish may have a pulse endurance, which is the time that an insulating material withstands a certain voltage according to IEC-60851-5 after curing, of 400 minutes or more, wherein the pulse endurance may be measured with the polyimide (thickness: 26±0.5 um) under the conditions of AC 1.5 kV, frequency 60 Hz, and leakage current upper limit of 5 mA. Specifically, the pulse endurance may be 410 minutes or more, 415 minutes or more, 420 minutes or more, 425 minutes or more, or 430 minutes or more. The above pulse endurance may be measured by fixing the film-type polyimide cured product to a jig, applying a certain voltage to the fixed polyimide, and measuring the time at which the leakage current exceeded 5 mA, using a withstand voltage meter (TSURUGA 8526).

In an embodiment, the polyimide varnish according to the present disclosure may have a coefficient of friction (PI-PI) between polyimide varnish cured products after curing of 0.38 or less, preferably 0.35 or less. The coefficient of friction may be measured using a coefficient of friction tester (QM110CF, QMESYS) by fixing any one film-type polyimide cured product to a pendulum and pulling it at a constant speed on the other film-type polyimide cured product, under a load of 200 gf and a speed of 2.5 mm/s.

In an embodiment, the polyimide varnish according to the present disclosure may have a coefficient of friction (PI-SUS) between a polyimide varnish cured product after curing and a stainless steel substrate of 0.35 or less, preferably 0.32 or less. The coefficient of friction may be measured using a coefficient of friction tester (QM110CF, QMESYS) by fixing the film-type polyimide cured product to a pendulum and pulling it at a constant speed on a stainless steel substrate, under a load of 200 gf and a speed of 2.5 mm/s.

In an embodiment, the polyimide varnish according to the present disclosure may have a peel strength after curing of 6 N/cm or more, preferably 6.5 N/cm or more, and more preferably 7 N/cm or more. The peel strength may be determined by measuring the 90° peel strength at 50 mm/sec at room temperature, using a UTM (Instron model 5564) instrument, wherein the peel strength may be measured using samples prepared with the film-type polyimide cured products with a thickness of 25 um located on a copper foil with a thickness of 36 um.

In another aspect of the present disclosure, there is provided a polyimide coating comprising a cured product of the polyimide varnish.

In an embodiment, a method of preparing the polyimide coating may comprise coating polyimide varnish on a conductor surface; and imidizing the polyimide varnish coated on the conductor surface.

The conductor may be a copper wire made of copper or a copper alloy, but may also comprise conductors made of other metal materials such as silver wire, etc., or various metal-plated wires such as aluminum or tin-plated conducting wires, etc. The conductor and coating may have a thickness according to the KS C3107 standard. A diameter of the conductor may be in the range of 0.3 to 3.2 mm, and a standard film thickness of the coating (average value of the maximum film thickness and minimum film thickness) may be 21 to 194 um for type 0, 14 to 169 um for type 1, and 10 to 31 um for type 2. Depending on the cross-sectional shape of the conductor, the conductor may be a round wire, a rectangular wire, a hexagonal wire, etc., but is not limited thereto.

In another aspect of the present disclosure, there is provided an electric wire comprising the polyimide coating.

Specifically, the wire may be a coated electric wire comprising the polyimide coating prepared by coating the polyimide varnish on a surface of the wire, followed by imidization. In an embodiment, the coated electric wire may comprise an electric wire; and a coating in which the above-described polyimide is coated on a surface of the electric wire and imidized.

Further, the present disclosure may provide an electronic device comprising the coated wire. The electronic device may be, for example, an electric motor.

### BRIEF DESCRIPTION OF THE DRAWINGS

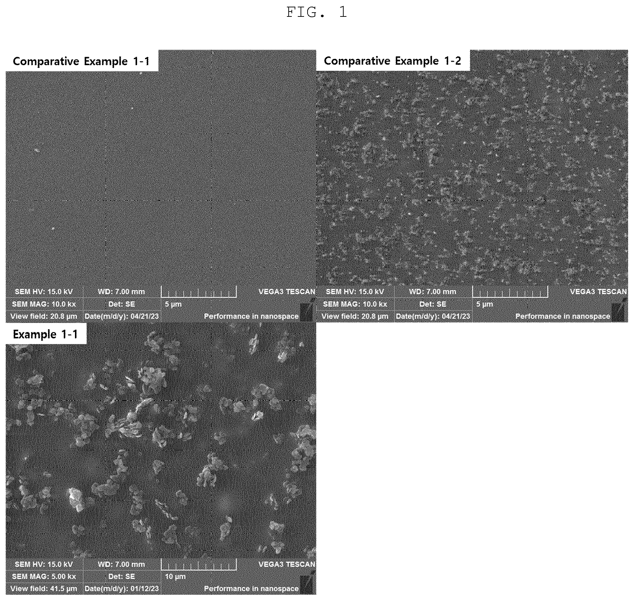

FIG. 1 shows surface SEM images of film-type polyimide cured products prepared by curing polyimide varnishes of Example 1-1, Comparative Example 1-1, and Comparative Example 1-2.

### DETAILED DESCRIPTION OF EMBODIMENTS

The following Examples are presented to help understanding of the present disclosure. The following examples are only provided to more easily understand the present disclosure, but the content of the present disclosure is not limited by these Examples.

### <Example>

### Example 1. Polyimide varnish

### Example 1-1

A polyamic acid solution was prepared by dispersing 99.5 to 100 mol% of pyromellitic dianhydride (PMDA), which is a dianhydride compound, and 75 mol% of 4,4'-diaminodiphenyl ether (ODA) and 25 mol% of p-phenylenediamine (PPD), which are diamine compounds, in 100 mol% of N,N'-dimethylacetamide (DMAc), wherein the polyimide solid content was aimed at 13 to 25 wt%.

To the polyamic acid solution, 5 wt% of boron nitride (BN) additive (particle diameter (D90): 5.4 um), 0.6 wt% of nanosilica additive (silica average particle diameter of 10 to 20 nm), 0.25 wt% of polyurethane-based dispersant (amine value of 48 mgKOH/g , specific gravity (20°C) of 1.05 g/ml), and 0.5 wt% of epoxy-based silane (OFS-6040) were added to prepare polyimide varnish.

### Example 1-2

Polyimide varnish was prepared in the same manner as Example 1-1, except that 10 wt% of boron nitride (BN) additive and 0.5 wt% of polyurethane-based dispersant were added instead of adding 5 wt% of boron nitride (BN) additive and 0.25 wt% of polyurethane-based dispersant in Example 1-1.

### Example 1-3

Polyimide varnish was prepared in the same manner as Example 1-1, except that 20 wt% of boron nitride (BN) additive and 1 wt% of polyurethane-based dispersant were added instead of adding 5 wt% of boron nitride (BN) additive and 0.25 wt% of polyurethane-based dispersant in Example 1-1.

### Comparative Example 1-1

Polyimide varnish was prepared in the same manner as Example 1-1, except that the boron nitride additive, nanosilica additive, epoxy-based silane, and polyurethane-based dispersant were not added instead of adding the boron nitride additive, nanosilica additive, epoxy-based silane, and polyurethane-based dispersant in Example 1-1.

### Comparative Example 1-2

Polyimide varnish was prepared in the same manner as Example 1-1, except that 5 wt% of the boron nitride (BN) additive and 0.25 wt% of polyurethane-based dispersant were not added but 3 wt% of nanosilica additive was added instead of 5 wt% of boron nitride (BN) additive, 0.6 wt% of nanosilica additive, and 0.25 wt% of polyurethane-based dispersant were added in Example 1-1.

Table 1 below shows the composition and content of polyimide varnishes according to Examples 1-1 to 1-3 and Comparative Examples 1-1 and 1-2. Here, in Table 1 below, the weight% (wt%) of the boron nitride additive, nanosilica additive, and epoxy-based silane indicates each amount of the boron nitride additive, nanosilica additive, and epoxy-based silane relative to the weight of the solid content of polyimide varnish, and the wt% of the dispersant indicates the total content of the dispersant relative to the total weight of the boron nitride additive.

**[Table 1]**

| Classificati on | Solution | Additive | | Dispersant | Silane coupling agent |
|---|---|---|---|---|---|
| | | Boron nitride (wt%) | Nanosilica (wt%) | PU-based dispersant (wt%) | OFS-6040 (wt%) |
| Example 1-1 | Polyamic acid solution (PAA Varnish) | 5 | 0.6 | 0.25 | 0.5 |
| Example 1-2 | | 10 | 0.6 | 0.5 | 0.5 |
| Example 1-3 | | 20 | 0.6 | 1 | 0.5 |
| Comparative Example 1-1 | | - | - | - | - |
| Comparative Example 1-2 | | - | 3 | - | - |

### Example 2. Polyimide coating

### Example 2-1

An electric wire containing a polyimide coating with a coating thickness of 100 µm or more was prepared in a coating curing furnace by repeating the process of coating, drying, and curing the polyimide varnish according to Example 1-1 on a 1 mm diameter copper wire, at least 20 times.

### Example 2-2

A wire containing a polyimide coating with a coating thickness of 100 um or more was prepared in the same manner as Example 2-1 except that the polyimide varnish according to Example 1-2 was used instead of using the polyimide varnish according to Example 1-1.

### Example 2-3

A wire containing a polyimide coating with a coating thickness of 100 um or more was prepared in the same manner as Example 2-1 except that the polyimide varnish according to Example 1-3 was used instead of using the polyimide varnish according to Example 1-1.

### <Experimental Examples>

### Experimental Example 1. Evaluation of physical properties

### Preparation of film-type cured product of polyimide varnish for measuring physical properties

The polyimide varnishes prepared in Examples 1-1 to 1-3 and Comparative Examples 1-1 and 1-2 were rotated at a high speed of 2,000 rpm to remove air bubbles. Then, each degassed polyimide varnish was applied on a glass substrate (230 mm x 230 mm, thickness: 0.55 mm) using a spin coater. Next, each film-type polyimide cured product was obtained by curing under the conditions of 110°C (20 minutes) → 150°C (20 minutes) → 200°C (20 minutes) → 300°C (20 minutes) under a nitrogen atmosphere. Here, film-type polyimide cured products for measuring pulse endurance were prepared with a thickness of 26 ± 1 um, and film-type polyimide products for measuring other physical properties (coefficient of thermal expansion, thermal conductivity, coefficients of friction, and peel strength) were prepared with a thickness of 20 ± 1 um.

FIG. 1 shows surface SEM images of film-type polyimide cured products prepared by curing polyimide varnishes of Example 1-1, Comparative Example 1-1, and Comparative Example 1-2.

As shown in FIG. 1, it was found that Comparative Example 1-1 had a clean surface due to the absence of additives, whereas Example 1-1 and Comparative Example 1-2 had additives visible on the surface, and well-dispersed dispersant.

It could also be seen that Comparative Example 1-2 included an excess of nanosilica with relatively small particle diameter, resulting in a dispersion of smaller particles compared to Example 1-1 that includes boron nitride and nanosilica together.

### (1) Coefficient of thermal expansion (CTE)

The slope in the range of 100 to 250°C was measured for the film-type polyimide cured products prepared from the polyimide varnishes of Examples 1-1 to 1-3 and Comparative Examples 1-1 and 1-2 above with TA's thermogravimetric analyzer (TMA) Q400 when raising a temperature from room temperature to 350°C at a rate of 10°C/min. Results thereof are shown in Table 2.

### (2) Thermal conductivity

For the film-type polyimide cured products prepared from the polyimide varnishes of Examples 1-1 to 1-3 and Comparative Examples 1-1 and 1-2 above, the thermal diffusivity in the thickness direction (through-plane) of the cured polyimide varnish under N₂ nitrogen gas conditions was measured using a thermal conductivity meter [light flash apparatus (LFA), LFA467, NETZSCH], and the thermal conductivity was calculated by multiplying the measured thermal conductivity values by the density (weight/volume) and specific heat (specific heat values measured using DSC) . Results thereof are shown in Table 2.

### (3) Pulse endurance

The film-type polyimide cured products (thickness: 26±1 um) prepared from the polyimide varnishes of Examples 1-1 to 1-3 and Comparative Examples 1-1 and 1-2 above were measured for pulse endurance using a withstand voltage meter (TSURUGA 8526) under the conditions of AC 1.5 kV, frequency 60 Hz, and leakage current upper limit of 5 mA. Specifically, the pulse endurance was determined by fixing the polyimide to a jig, applying a certain voltage to the fixed polyimide, and measuring the time at which the leakage current exceeded 5 mA. Results thereof are shown in Table 2 below.

### (4) Coefficients of friction

The coefficients of friction were measured for the film-type polyimide cured products prepared from the polyimide varnishes of Examples 1-1 to 1-3 and Comparative Examples 1-1 and 1-2 above, using a coefficient of friction tester (QM110CF, QMESYS). Specifically, under a load of 200 gf and a speed of 2.5 mm/s, the coefficient of friction for PI-PI kinetic friction was measured by fixing any one film-type polyimide cured product to a pendulum and pulling it at a constant speed on the other film-type polyimide cured product, and the coefficient of friction for PI-SUS kinetic friction was measured by fixing the polyimide cured product to a pendulum and pulling it at a constant speed on a stainless steel substrate. Results thereof are shown in Table 2 below.

### (5) Peel strength

The 90° peel strength at 50 mm/sec at room temperature was measured for the film-type polyimide cured products prepared from the polyimide varnishes of Examples 1-1 to 1-3 and Comparative Examples 1-1 and 1-2 above, using a UTM (Instron model 5564) instrument, and results thereof are shown in Table 2 below. Here, the peel strength was measured using samples prepared with the film-type polyimide cured products with a thickness of 25 um located on a copper foil with a thickness of 36 um.

Table 2 below shows the results of coefficient of thermal expansion (CTE), thermal conductivity, pulse endurance, coefficients of friction, and peel strength measurements of film-type polyimide cured products prepared from the polyimide varnishes of Examples 1-1 to 1-3 and Comparative Examples 1-1 and 1-2.

**[Table 2]**

| Classification | Comparativ e Example 1-1 | Comparative Example 1-2 | Example 1-1 | Example 1-2 | Example 1-3 | |
|---|---|---|---|---|---|---|
| First additive amount (wt%) | - | - | 5 | 10 | 20 | |
| Second additive amount (wt%) | - | 3 | 0.6 | 0.6 | 0.6 | |
| Dispersant amount (wt%) | - | - | 0.25 | 0.5 | 1 | |
| CTE (ppm/°C) | | 35 | 32 | 25 | 26 | 24 |
| Thermal conductivity (W/mK) | | 0.28 | 0.26 | 0.28 | 0.35 | 0.42 |
| Pulse endurance (min) | | 83 | 103 | 434 | 450 | 777 |
| Coeffici ents of friction | PI-PI | 0.54 | 0.38 | 0.34 | 0.33 | 0.31 |
| | PI-SUS | 0.44 | 0.34 | 0.29 | 0.31 | 0.30 |
| Peel strength (N/cm) | | 3.5 | - | >7.0 | >7.0 | >7.0 |

It could be confirmed from Table 2 that Examples 1-1 to 1-3 including the first additive (boron nitride), the second additive (nanosilica), and the dispersant had the coefficient of thermal expansion (CTE) smaller than that of Comparative Examples 1-1 and 1-2, and showed significantly improved thermal conductivity compared to Comparative Examples 1-1 and 1-2.

Further, it could be seen that Examples 1-1 to 1-3 had significantly enhanced pulse endurance and peel strength (adhesion), and improved coefficients of friction with relatively small values.

From these results, it was possible to obtain polyimide varnishes having excellent thermal properties, pulse endurance and adhesion, and improved coefficients of friction by appropriately combining the dispersant and the additives.

The polyimide varnish according to the present disclosure and the polyimide coating comprising the same may comprise a first additive (boron nitride), a second additive (nanosilica), and a dispersant, thereby having enhanced pulse endurance, adhesion, and thermal conductivity, improved coefficients of friction, and excellent dispersibility for the first additive and the second additive.

In addition, according to the present disclosure, the pulse endurance may be enhanced to increase lifespan and motor durability for partial discharge, and the coefficients of friction may be improved to mitigate buckling when processing hairpins and to improve defects by reducing friction during stator insertion, thereby enhancing yield and processability.

The present disclosure may also contribute to improving performance of the motor by improving thermal conductivity, thereby suppressing the temperature rise of the motor and enabling an increase in the rated current.

Further, the present disclosure may realize reliability of structure and function even in harsh environments due to enhanced adhesion.

In the specification, details capable of being sufficiently recognized and inferred by those skilled in the art of the present disclosure are omitted, and various modifications can be made within the scope that does not change the technical spirit or essential configuration of the present disclosure other than the specific examples described in the present specification. Therefore, the present disclosure may be practiced in other ways than specifically described and exemplified herein, which can be understood by those skilled in the art.

## Claims

1. Polyimide varnish comprising:
a polyamic acid solution containing diamine monomer and dianhydride monomer as polymerized units;
a first additive containing boron nitride;
a second additive containing nanosilica; and
a dispersant.

2. The polyimide varnish of claim 1, wherein the first additive has an amount of 1 to 40 wt% relative to the weight of solid content of the polyimide varnish.

3. The polyimide varnish of claim 1 or claim 2, wherein the second additive has an amount of 0.01 to 60 wt% relative to the weight of solid content of the polyimide varnish.

4. The polyimide varnish of any of claims 1 to 3, wherein the first additive has a particle diameter (D90) of 1 to 20 um, and the second additive has an average particle diameter of 1 to 200 nm.

5. The polyimide varnish of any of claims 1 to 4, wherein the dispersant comprises at least one selected from the group consisting of a polyethylene-based dispersant, a polyester-based dispersant, a polycarboxylic acid ester-based dispersant, an unsaturated polyamide-based dispersant, a polycarboxylic acid-based dispersant, a polycarboxylic acid alkyl salt dispersant, a polyacrylic-based dispersant, a polyethyleneimine-based dispersant, and a polyurethane-based dispersant.

6. The polyimide varnish of any of claims 1 to 5, wherein the dispersant has an amount of 1 to 25 wt% relative to the weight of the first additive.

7. The polyimide varnish of any of claims 1 to 6, wherein the dianhydride monomer comprises at least one selected from the group consisting of pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl)propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride.

8. The polyimide varnish of any of claims 1 to 7, wherein the diamine monomer comprises at least one selected from the group consisting of 1,4-diaminobenzene (PPD), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diamino diphenylmethane, 4,4'-diaminobenzanilide, 3,3'-dimethoxybenzidine, 2,2'-dimethoxybenzidine, 3,3'-diaminodiphenyl ether, 3,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenyl)phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3)-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

9. The polyimide varnish of any of claims 1 to 8, wherein the polyamic acid solution further contains an organic solvent.

10. The polyimide varnish of any of claims 1 to 9, further comprising: a silane coupling agent.

11. The polyimide varnish of any of claims 1 to 10, wherein a coefficient of thermal expansion (CTE) after curing the polyimide varnish is 20 to 30 ppm/°C.

12. The polyimide varnish of any of claims 1 to 11, wherein a thermal conductivity after curing the polyimide varnish is 0.2 to 0.8 W/mK.

13. The polyimide varnish of any of claims 1 to 12, wherein a pulse endurance, which is the time that an insulating material withstands a certain voltage according to IEC-60851-5 after curing the polyimide varnish, is 400 minutes or more.

14. The polyimide varnish of any of claims 1 to 13, wherein a coefficient of friction (PI-PI) between polyimide varnish cured products after curing the polyimide varnishes is 0.38 or less, and
a coefficient of friction (PI-SUS) between a polyimide varnish cured product after curing the polyimide varnish and a stainless steel substrate is 0.35 or less.

15. The polyimide varnish of any of claims 1 to 14, wherein a peel strength after curing the polyimide varnish is 6 N/cm or more.
